(19) Europäisches Patentamt
European Patent Office
Office européen des brevets

(11) **EP 1 757 463 B1**

(12) **EUROPEAN PATENT SPECIFICATION**

(45) Date of publication and mention
of the grant of the patent:
**13.06.2012 Bulletin 2012/24**

(51) Int Cl.:
***B60C 11/02*** *(2006.01)*

(21) Application number: **06254097.6**

(22) Date of filing: **04.08.2006**

(54) **Retread tire and method of producing the same**

Rundzuerneuernder Reifen und Herstellungsverfahren

Pneu à rechaper et méthode de fabrication

(84) Designated Contracting States:
**FR IT**

(30) Priority: **22.08.2005 JP 2005239625**
**13.06.2006 JP 2006163585**

(43) Date of publication of application:
**28.02.2007 Bulletin 2007/09**

(73) Proprietor: **Bridgestone Corporation**
**Tokyo 104-8340 (JP)**

(72) Inventor: **Kaneda, Eiichi**
**Kodaira-shi**
**Tokyo 187-8531 (JP)**

(74) Representative: **Oxley, Robin John George et al**
**Marks & Clerk LLP**
**90 Long Acre**
**London**
**WC2E 9RA (GB)**

(56) References cited:
**EP-A- 0 481 080        EP-A- 0 738 614**
**WO-A-2006/059579    JP-A- 2002 356 102**
**US-A- 3 198 679        US-A- 3 951 720**
**US-A1- 2005 034 797**

**Description**

BACKGROUND OF THE INVENTION

1. FIELD OF THE INVENTION

This invention relates to a retread tire and a method of producing the same, and more particularly to a tire being less in the deterioration of the durability even in the repetitive retreading, a retread tire having a high durability and a method of producing such a retread tire.

2. Description of Related Art

Heretofore, in high-priced tires such as airplane tires and the like, when the tread rubber is worn, the retreading of the tire is commonly carried out by removing the worn tread rubber and then attaching a retreading rubber to a base tire after the removal of the worn tread rubber. In this case, since it is generally difficult to remove only the tread rubber from the tire in a high dimensional accuracy, it is common that a cushion rubber is arranged in a tire to be retreaded at an inside of a tread rubber and at an outside of a carcass in a radial direction of the tire and in the retreading, the tread rubber and a part of the cushion rubber are removed from the tire so as not to damage the carcass located at the inside of the cushion rubber in the radial direction of the tire.

In the retread tire manufactured as mentioned above, however, the peeling is liable to be easily caused at an interface between a base tire after the removal of the tread rubber and a part of the cushion rubber and a retreading rubber, i.e. a retreading interface, so that it is demanded to improve the peel strength at the retreading interface. Up to now, there are proposed various techniques for improving the peel strength at the retreading interface.

For example, JP-A-2004-43640 discloses that a rubber composition containing a particular compounding amount of a compound with a particular structure and having excellent curing properties at a low temperature in a short time and a high fracture resistance is used in the cushion rubber.

Also, Japanese Patent No. 3502176 discloses a technique of improving the durability of the retread tire by controlling a ratio of 100% modulus of a retreading cushion rubber to 100% modulus of a coating rubber for a carcass ply in a base tire to a particular range.

However, the techniques disclosed in the above patent articles still admit of improving the peel strength at the retreading interface, and hence it is further demanded to develop retread tires having a higher durability.

In the conventional techniques, there are few examples of examining the control on the deterioration of the durability in the retread tire after the repetitive retreading. Particularly, the deterioration of the durability in the high-speed, high-load tires to be repeatedly retreaded such as airplane tires and the like can not be controlled sufficiently. Attention is drawn to JP 2002 356 102A, US 3,198,679A and US2005/034 797A1.

Document US3198679 discloses a retread tire according to the preamble of claim 1. Document US20050034797 discloses a retread tire according to the preamble of claim 4. Document EP0738614 discloses a retread tire according to the preamble of claim 5.

SUMMARY OF THE INVENTION

It is, therefore, an object of the invention to solve the problems of the conventional technique and to provide a retread tire developing a high durability even after the repetitive retreading and a method of producing such a retread tire. It is another object of the invention to provide a tire being less in the deterioration of the durability even after the repetitive retreading.

The inventor has made various studies in order to achieve the above objects and elucidated that a sulfur content in the vicinity of the retreading interface of the retread tire is closely related to the durability of the retread tire and that sulfur is concentrated in the vicinity of the retreading interface or sulfur migrates from a side of a retreading rubber (new rubber) to a side of a base tire (cured rubber) every the retreading to cause the concentration of sulfur in the vicinity of the retreading interface of the base tire, whereby the thermal deterioration of rubber in the vicinity of the retreading interface is promoted to deteriorate the peel strength at the retreading interface of the retread tire. As such a tire, there are a tire comprising at least a bias carcass, a cushion rubber and a tread rubber viewing from an inside of a tread center zone in a radial direction of the tire, and a tire comprising at least a radial carcass, a belt and, if necessary, a cushion rubber, and a tread rubber viewing from an inside of a tread center zone in a radial direction of the tire. Also, the inventor has made further studies on these tires and found that (1) a sulfur content in the cushion rubber is controlled to a predetermined range, (2) a sulfur content in rubber for the belt is controlled to a predetermined range, or (3) a sulfur content in a portion of the retreading rubber located in a predetermined region from the retreading interface is controlled to a predetermined range, whereby the increase of the sulfur content in the cushion rubber or belt rubber in the retreading can be suppressed to prevent the lowering of the peel strength at the retreading interface of the retread tire and hence the deterioration of the durability of the retread tire.

According to a first aspect of the invention, there is provided a retread tire according to claim 1.

According to a second aspect of the invention, there is provided a retread tire according to claim 4.

According to a third aspect of the invention, there is provided a retread tire according to claim 5.

According to a fourth aspect of the invention, there is provided a method of producing a retread tire as claimed in claim 11.

According to a fifth aspect of the invention, there is provided a method of producing a retread tire, as claimed in claim 14.

According to a sixth aspect of the invention, there is provided a method of producing a retread tire, as claimed in claim 15.

Preferable embodiment of aspects of the invention are provided in the dependent claims.

According to aspects of the invention, the sulfur content in the portion of the retreading rubber located within 5 mm from the retreading interface is 0.75-1.60% by mass, so that there can be provided a retread tire having a higher durability even after the repetitive retreading as well as a method of producing the same. Further, the sulfur content C of the cushion rubber and the retreading number N satisfy the relationship of the equation (I), so that there can be provided a retread tire having a higher durability even after the repetitive retreading. Thus, according to the invention, the retreading number of the bias tire can be increased as compared with the conventional technique to reduce the cost burdened in the user, and also the total service life of the tire can be prolonged to realize the resource saving.

According to aspects of the invention, the sulfur content in the portion of the retreading rubber located within 5 mm from the retreading interface is 0.75-1.80% by mass, so that there can be provided a retread tire having a higher durability even after the repetitive retreading as well as a method of producing the same. Further, the sulfur content C of the belt or the cushion rubber and the retreading number N satisfy the relationship of the equation (II), so that there can be provided a retread tire having a higher durability even after the repetitive retreading. Thus, according to aspects of the invention, the retreading number of the radial tire can be increased as compared with the conventional technique to reduce the cost burdened in the user, and also the total service life of the tire can be prolonged to realize the resource saving.

BRIEF DESCRIPTION OF THE DRAWINGS

FIG 1 is a diagrammatically partial section view of a tread center portion of a tire according to an embodiment of the invention;

FIG. 2 is a diagrammatically partial section view of a tread center portion of a base tire formed by removing a tread rubber and a cushion rubber from the tire of FIG 1;

FIG 3 is a diagrammatically partial section view of a tread center portion of a bias retread tire formed by attaching a retreading rubber to a radially outer face of the base tire of FIG 2;

FIG 4 is a diagrammatically partial section view of a tread center portion of a tire according to another embodiment of the invention;

FIG 5 is a diagrammatically partial section view of a tread center portion of a base tire formed by removing a tread rubber and a cushion rubber from the tire of FIG 4; and

FIG 6 is a diagrammatically partial section view of a tread center portion of a radial retread tire formed by attaching a retreading rubber to a radially outer face of the base tire of FIG 5.

DESCRIPTION OF THE PREFERRED EMBODIMENTS

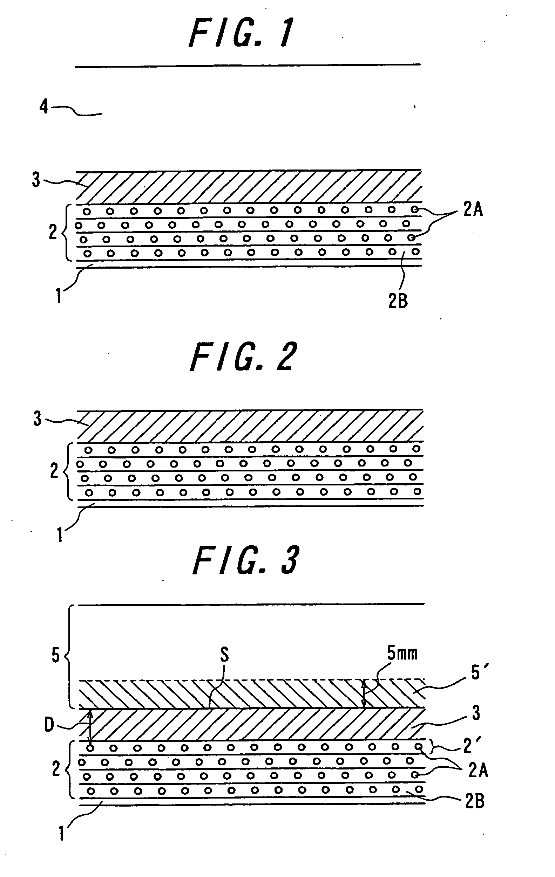

The invention will be described in detail with reference to FIGS. 1 to 3. FIG 1 is a diagrammatically partial section view of a tread center portion of a tire according to an embodiment of the invention, and FIG 2 is a diagrammatically partial section view of a tread center portion of a base tire formed by removing a tread rubber and a cushion rubber from the tire of FIG 1, and FIG 3 is a diagrammatically partial section view of a tread center portion of a bias retread tire formed by attaching a retreading rubber to a radially outer face of the base tire of FIG. 2.

The tire shown in FIG 1 (new bias tire product) comprises an innerliner 1, a bias carcass 2, a cushion rubber 3 and a tread rubber 4 viewing from an inside of a tread center zone in a radial direction of the tire. Moreover, a protection layer (not shown) made from a reinforcing member such as cord or the like may be embedded in the tread rubber 4 for the purpose of protecting the carcass 2. This tire is characterized in that the sulfur content of the cushion rubber 3 is 0.75-1.60% by mass.

In general, the retread tire is manufactured by attaching a retreading rubber composed mainly of an uncured rubber to a base tire composed mainly of a cured rubber. For this end, the rubber portion of the base tire for the retread tire is repeatedly cured, so that such a rubber portion is thermally deteriorated to lower the rubber properties and further lower the peel strength at the retreading interface, and hence the durability of the retread tire is deteriorated. In this connection, the inventor has minutely examined the change of composition and properties of the rubber in the vicinity of the retreading interface of the retread tire, particularly the cushion rubber to be repeatedly cured, and discovered that sulfur migrated from the retreading rubber (uncured rubber) is stored in the cushion rubber in the vicinity of the retreading interface by repeating the retreading, and, for example, the sulfur content being about 1.5% by mass at the new product is increased to 2-3% by mass by repeating the retreading 2-4 times, and such a storage of sulfur results in the deterioration of the properties. From this discovery, it is considered that it is required to optimize the sulfur content in the base tire at the time of the new product and/or the sulfur content in the retreading rubber as a tire used for the retreading. In the tire of the invention, the sulfur content of the cushion rubber 3 is within a range of 0.75-1.60% by mass, which is lower than that of the cushion rubber in the conventional tire at the time of a new product, so that the sulfur content is lower than that in the conventional tire even after the retreading. In the tire of the invention, therefore, the deterioration of the durability is less even after the repetitive retreading. Moreover, when the sulfur content of the cushion rubber 3 exceeds 1.60% by mass, the sulfur content in the cushion rubber after the retreading becomes high unless the sulfur content of the retreading rubber is decreased, and hence the peel strength at the retreading interface becomes low and the durability of the tire is largely deteriorated. When the sulfur content of the cushion rubber 3 is less than 0.75% by mass, the fracture properties such as tensile strength (Tb) of the cushion rubber and the like lower.

The above tire is not particularly limited except that a rubber composition having a sulfur content of 0.75-1.60% by mass is used in the cushion rubber 3, and can be produced according to the usual manner. Moreover, such a rubber composition used in the cushion rubber can be manufactured by compounding the rubber component with sulfur and various additives, and milling, warming up, extruding and the like. In the illustrated tire, it is preferable to use rubber having a low air permeability as the innerliner 1. Also, the bias carcass 2 is comprised of two or more carcass plies, each containing cords 2A covered with a coating rubber 2B. Moreover, the illustrated bias carcass 2 is comprised of four carcass plies, but the ply number is not limited thereto in the tire and retread tire according to the invention. As the tread rubber 4, it is preferable to use rubber having excellent wear resistance and fracture properties. The tread rubber may be a multi-layer structure such as cap/base structure or the like.

The base tire shown in FIG 2 is formed by removing the tread rubber 4 and a part of the cushion rubber 3 from the tire of FIG 1, and has the innerliner 1, the bias carcass 2 and the cushion rubber 3 from the radially inside of the tread center portion. The invention may use either the base tire formed from the non-retread tire or the base tire formed from the retread tire. In the base tire formed from the non-retread tire, it is sufficient to remove at least the tread rubber 4 from the non-retread tire, or a part of the cushion rubber 3 may be removed together with the tread rubber 4. In the base tire formed from the retread tire after one or more retreadings, it is sufficient to remove at least the retreading rubber attached in the previous retreading, or a part of the cushion rubber 3 may be removed together with the attached retreading rubber.

The retread tire shown in FIG 3 is formed by attaching a retreading rubber 5 to the radially outer face of the base tire shown in FIG. 2, and has the innerliner 1, the bias carcass 2, the cushion rubber 3 and the retreading rubber 5 from the radially inside of the tread center portion. In the retread tire, the sulfur content in a portion 5' of the retreading rubber 5 within 5 mm from the retreading interface S is 0.75-1.60% by mass.

As mentioned above, as means for controlling the sulfur content of rubber in the vicinity of the retreading interface, i.e. the sulfur content of the cushion rubber 3 to a lower level even after the retreading, it is effective to control the sulfur content of the cushion rubber 3 at the time of a new product to a low level. However, sulfur migrates from the retreading rubber 5 in the vicinity of the retreading interface to the cushion rubber 3 in the retreading, so that it is also effective to control the sulfur content in the vicinity of the retreading interface S of the retreading rubber 5, particularly the sulfur content in the portion 5' of the retreading rubber 5 within 5 mm from the retreading interface S to a low level. In the retread tire of the invention, the sulfur content in the portion 5' of the retreading rubber 5 within 5 mm from the retreading interface S is 0.75-1.60% by mass, which is lower than that in the conventional retread tire, so that the amount of sulfur migrated from the retreading rubber 5 to the cushion rubber 3 is less. As a result, the retread tire of the invention has a high durability even after the repetitive retreading. Moreover, when the sulfur content in the portion 5' of the retreading rubber 5 within 5 mm from the retreading interface S exceeds 1.60% by mass, the sulfur content of the cushion rubber 3 after the retreading becomes large unless the sulfur content in the cushion rubber 3 at the time of a new product is reduced, and hence the peel strength at the retreading interface becomes low and the durability of the tire is largely deteriorated. While, when the sulfur content in the portion 5' of the retreading rubber 5 within 5 mm from the retreading interface S is less than 0.75% by mass, the fracture properties such as tensile strength (Tb) of retreading rubber 5 and the like lower.

In the above retread tire of the invention, it is preferable that a distance D between the retreading interface S and the cord 2A constituting the radially outermost carcass ply 2' of the bias carcass 2 is not more than 5 mm. The distance D is a shortest distance from the radially outermost point of the cord 2A constituting the outermost carcass ply 2' to the retreading interface S at the cross-section of the tread center portion of the tire.

In the retread tire of the invention, it is sufficient that the sulfur content in the portion 5' of the retreading rubber 5 within 5 mm from the retreading interface S is 0.75-1.60% by mass, while the sulfur content of the cushion rubber 3 at the non-retreading state (new product) is not particularly limited, but it is preferable to be 0.75-1.60% by mass. In the latter case, the sulfur content of the cushion rubber 3 after the retreading can be further reduced to further control the lowering of the peel strength at the retreading interface and the deterioration of the tire durability.

The retread tire of the invention as mentioned above can be manufactured according to the usual manner by removing at least a tread rubber or a retreading rubber from a tire or a retread tire comprising a bias carcass, a cushion rubber and a tread rubber or a retreading rubber to form a base tire, and attaching a retreading rubber having a sulfur content of 0.75-1.60% by mass in its portion within 5 mm from a retreading interface (i.e. interface between the base tire and the retreading rubber) to a radially outer face of the base tire. In the formation of the base tire, it is preferable to conduct the buffing after the removal of the tread rubber or the retreading rubber. In the retread tire of FIG. 3, the innerliner 1 and the bias carcass 2 are the same as in the tire of FIG 1, and also the retreading rubber 5 is similar to the tread rubber of the new tire product and may be a multi-layer structure such as cap/base structure and may include a protection layer made from the reinforcing member such as cord or the like for the purpose of protecting the bias carcass 2. Also, the rubber composition used in the retreading rubber can be produced by compounding a rubber component with sulfur and various additives and then milling, warming up, extruding or the like.

In another retread tire of the invention having the above construction, the sulfur content C and the retreading number N satisfy a relationship of the following equation (I):

$$C \le -0.025 \times N^2 + 0.5 \times N + 1.6 \quad ..... \text{(I)}$$

As mentioned above, as means for controlling the sulfur content of rubber in the vicinity of the retreading interface, i.e. sulfur content of the cushion rubber 3 to a low level even after the retreading, it is effective to (1) control the sulfur content of the cushion rubber 3 at the time of a new tire product to a low level, or (2) control the sulfur content in the portion 5' of the retreading rubber within 5 mm from the retreading interface S to a low level. Further, the inventor has noticed the relationship between the sulfur content C of the cushion rubber 3 and the retreading number N and made various studies on such a relationship and found that the retread tire satisfying the relationship of the equation (I) has a high durability. Particularly, the retread tire satisfying the relationship of the equation (I) has a large peel strength at the retreading interface and a high durability even if the sulfur content of the cushion rubber 3 as a new tire product is outside the range of 0.75-1.60% by mass or the sulfur content in the portion 5' of the retreading rubber within 5 mm from the retreading interface S is outside the range of 0.75-1.60% by mass. Moreover, when the sulfur content C of the cushion rubber 3 exceeds the value defined in the right side of the equation (1), the deterioration of the properties in the cushion rubber 3 is large and also the lowering of the peel strength at the retreading interface is large. In the equation (I), the retreading number N is preferable to be a counting number of not more than 10. In this case, the retread tire has a sufficiently high durability.

The retread tire satisfying the relationship of the equation (I) can be manufactured by controlling the sulfur content of the cushion rubber as a new tire product, the sulfur content in the portion of the retreading rubber within 5 mm from the retreading interface, and the curing conditions and the like. Moreover, the forming method of the base tire and the attaching method of the retreading rubber are not particularly limited. In such a retread tire, the sulfur content of the cushion rubber as a new tire product and the sulfur content in the portion of the retreading rubber within 5 mm from the retreading interface are not particularly limited, but it is preferable that the sulfur content of the cushion rubber as a new tire product and the sulfur content in the portion of the retreading rubber within 5 mm from the retreading interface are a range of 0.75-1.60% by mass, respectively.

The above tire and retread tire according to the invention are high in the peel strength at the retreading interface even after the repetitive retreading, so that they are particularly suitable as a high-speed, high-load, expensive tire conducting plural retreading such as airplane tire or the like.

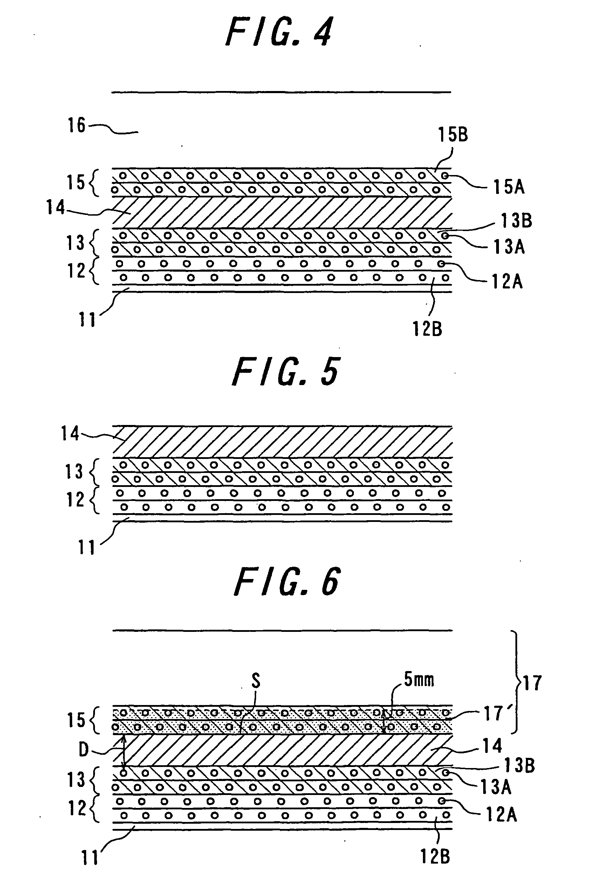

Further, the invention will be described in detail with reference to FIGS. 4 to 6. FIG 4 is a diagrammatically partial section view of a tread center portion of a tire according to another embodiment of the invention, and FIG 5 is a diagrammatically partial section view of a tread center portion of a base tire formed by removing a tread rubber and a cushion rubber from the tire of FIG 4, and FIG 6 is a diagrammatically partial section view of a tread center portion of a bias retread tire formed by attaching a retreading rubber to a radially outer face of the base tire of FIG. 5.

The tire shown in FIG. 4 (new bias tire product) comprises an innerliner 11, a radial carcass 12, a belt 13, a cushion rubber 14, a belt 15 and a tread rubber 16 viewing from an inside of a tread center zone in a radial direction of the tire. The belt 13 located at a radially inside of the cushion rubber 14 and the belt 15 located at a radially outside of the cushion rubber 14 are comprised of one or more belt layers each containing plural cords 13A, 15A covered with coating rubbers 13B, 15B, respectively. Moreover, each of the belts 13, 15 in the illustrated tire is comprised of two belt layers, but the number of the belt layers in the tire or a retread tire mentioned below are not limited thereto. This tire is characterized in that the sulfur content of the coating rubber 13B for the belt 13 and/or the cushion rubber 14 is 0.75-1.80% by mass.

As previously mentioned, it is required to optimize the sulfur content in the base tire at the time of the new product and/or the sulfur content in the retreading rubber as a tire used for the retreading because the deterioration of the properties in the retread tire is due to the storing of sulfur migrated from the retreading rubber into the base tire. In the above tire of the invention, the sulfur content of the coating rubber 13B and/or the cushion rubber 14 is within a range of 0.75-1.80% by mass, which is lower than that of the cushion rubber in the conventional tire at the time of a new product, so that the sulfur content is lower than that in the conventional tire even after the retreading. In the tire of the invention, therefore, the deterioration of the durability is less even after the repetitive retreading. Moreover, when the sulfur content of the coating rubber 13B and/or the cushion rubber 14 in the base tire exceeds 1.80% by mass, the sulfur content in the coating rubber for the belt and/or the cushion rubber after the retreading becomes high unless the sulfur content of the retreading rubber is decreased, and hence the peel strength at the retreading interface becomes low and the durability of the tire is largely deteriorated. When the sulfur content of the coating rubber 13B and/or the cushion rubber 14 is less than 0.75% by mass, the fracture properties such as tensile strength (Tb) of the coating rubber for the belt and/or the cushion rubber and the like lower. In this connection, the sulfur content of the coating rubber 13B for the belt and/or the cushion rubber 14 is preferably 0.80-1.40% by mass, more preferably 0.90-1.20% by mass from a viewpoint of the peel strength at the retreading interface and the fracture properties of the coating rubber and/or cushion rubber.

The above tire is not particularly limited except that a rubber composition having a sulfur content of 0.75-1.80% by mass is used in the coating rubber 13B for the belt 13 and/or the cushion rubber 14, and can be produced according to the usual manner. Moreover, such a rubber composition used in the coating rubber 13B and/or the cushion rubber 14 can be manufactured by compounding the rubber component with sulfur and various additives, and milling, warming up, extruding and the like. In the illustrated tire, it is preferable to use rubber having a low air permeability as the innerliner 11. Also, the radial carcass 12 is comprised of one or more carcass plies, each containing cords 12A covered with a coating rubber 12B. Moreover, the illustrated radial carcass 12 is comprised of two carcass plies, but the ply number is not limited thereto in the tire and retread tire according to the invention. As the tread rubber 16, it is preferable to use rubber having excellent wear resistance and fracture properties. The tread rubber 16 may be a multi-layer structure such as cap/base structure or the like.

The base tire shown in FIG. 5 is formed by removing the tread rubber 16, the belt 15 located outward from the cushion rubber 14 in the radial direction of the tire and a part of the cushion rubber 14 from the tire of FIG. 4, and has the innerliner 11, the radial carcass 12, the belt 13 and the cushion rubber 14 from the radially inside of the tread center portion. The invention may use either the base tire formed from the non-retread tire or the base tire formed from the retread tire. In the base tire formed from the non-retread tire, it is sufficient to remove at least the tread rubber 16 from the non-retread tire, or a part of the cushion rubber 14 may be removed together with the tread rubber 16, or when the belt 15 is located outward from the cushion rubber 14 in the radial direction of the tire, the belt 15 may be removed together with the tread rubber 16. In the base tire formed from the retread tire after one or more retreadings, it is sufficient to remove at least the retreading rubber attached in the previous retreading, or a part of the cushion rubber 14 may be removed together with the attached retreading rubber.

The retread tire shown in FIG 6 is formed by attaching a retreading rubber 17 to the radially outer face of the base tire shown in FIG. 5, and has the innerliner 11, the radial carcass 12, the belt 13, the cushion rubber 14 and the retreading rubber 17 from the radially inside of the tread center portion. In the retread tire, the sulfur content in a portion 17' of the retreading rubber 17 within 5 mm from the retreading interface S is 0.75-1.80% by mass.

As mentioned above, as means for controlling the sulfur content of rubber in the vicinity of the retreading interface, i.e. the sulfur content of the coating rubber 13B for the belt and/or the cushion rubber 14 to a lower level even after the retreading, it is effective to control the sulfur content of the coating rubber 13B and/or the cushion rubber 14 at the time of a new product to a low level. However, sulfur migrates from the retreading rubber 17 in the vicinity of the retreading interface to the coating rubber 13B and/or the cushion rubber 14 in the retreading, so that it is also effective to control the sulfur content in the vicinity of the retreading interface S of the retreading rubber 17, particularly the sulfur content in the portion 17' of the retreading rubber 17 within 5 mm from the retreading interface S to a low level. In the retread tire of the invention, the sulfur content in the portion 17' of the retreading rubber 17 within 5 mm from the retreading interface S is 0.75-1.80% by mass, which is lower than that in the conventional retread tire, so that the amount of sulfur migrated from the retreading rubber 17 to the coating rubber 13B and/or the cushion rubber 14 is less. As a result, the retread tire of the invention has a high durability even after the repetitive retreading. Moreover, when the sulfur content in the portion 17' of the retreading rubber 17 within 5 mm from the retreading interface S exceeds 1.80% by mass, the sulfur content of the coating rubber 13B and/or the cushion rubber 14 after the retreading becomes large unless the sulfur content in the coating rubber 13B and/or the cushion rubber 14 at the time of a new product is reduced, and hence the peel strength at the retreading interface becomes low and the durability of the tire is largely deteriorated. While, when the sulfur content in the portion 17' of the retreading rubber 17 within 5 mm from the retreading interface S is less than 0.75% by mass, the fracture properties such as tensile strength (Tb) of retreading rubber 17 and the like lower. In this case, the sulfur content in the portion 17' of the retreading rubber 17 within 5 mm from the retreading interface S is preferably 0.80-1.40% by mass, more preferably 0.90-1.20% by mass from a viewpoint of the amount of sulfur migrated toward the base tire and the fracture properties of the retreading rubber 17.

In the above retread tire of the invention, it is preferable that a distance D between the retreading interface S and the cord 12A constituting the radially outermost carcass ply is not more than 5 mm. The distance D means (1) a shortest distance from the radially outermost point of the cord 12A constituting the outermost carcass ply to the retreading interface S at the cross-section of the tread center portion of the tire when the retread tire has not the belt 13 located inward from the cushion rubber 14 in the radial direction of the tire, or (2) a shortest distance from the radially outermost point of the cord 13A constituting the outermost belt layer to the retreading interface S at the cross-section of the tread center portion of the tire when the retread tire has the belt 13 located inward from the cushion rubber 14 in the radial direction of the tire.

In the retread tire of the invention, it is sufficient that the sulfur content in the portion 17' of the retreading rubber 17 within 5 mm from the retreading interface S is 0.75-1.80% by mass, while the sulfur content of the coating rubber 13B for the belt and/or the cushion rubber 14 at the non-retreading state (new product) is not particularly limited, but it is preferable to be 0.75-1.80% by mass. In the latter case, the sulfur content of the coating rubber 13B and/or the cushion rubber 14 after the retreading can be further reduced to further control the lowering of the peel strength at the retreading interface and the deterioration of the tire durability. Moreover, the sulfur content of the coating rubber 13B for the belt and/or the cushion rubber 14 at the non-retreading state is preferably 0.80-1.40% by mass, more preferably 0.90-1.20% by mass from a viewpoint of more controlling the lowering o the peel strength at the retreading interface and the deterioration of the tire durability.

The retread tire of the invention as mentioned above can be manufactured according to the usual manner by removing at least a tread rubber or a retreading rubber from a tire or a retread tire comprising a radial carcass, a belt, a cushion rubber and a tread rubber or a retreading rubber to form a base tire, and attaching a retreading rubber having a sulfur content of 0.75-1.80% by mass in its portion within 5 mm from a retreading interface (i.e. interface between the base tire and the retreading rubber) to a radially outer face of the base tire. In the formation of the base tire, it is preferable to conduct the buffing after the removal of the tread rubber or the retreading rubber. In the retread tire of FIG. 6, the innerliner 11 and the radial carcass 12 are the same as in the tire of FIG. 4, and also the retreading rubber 17 is similar to the tread rubber 16 of the new tire product and may be a multi-layer structure such as cap/base structure and may further include a cushion rubber 14 and a belt 15 for the purpose of protecting the radial carcass 12. Also, the rubber composition used in the retreading rubber can be produced by compounding a rubber component with sulfur and various additives and then milling, warming up, extruding or the like.

In another retread tire of the invention having the above construction, the sulfur content C in the coating rubber 13B and/or the cushion rubber 14 and the retreading number N satisfy a relationship of the following equation (II):

$$C \leq -0.015 \times N^2 + 0.65 \times N + 1.80 \ldots\ldots \text{(I)}$$

As mentioned above, as means for controlling the sulfur content of rubber in the vicinity of the retreading interface, i.e. sulfur content of the coating rubber 13B and/or the cushion rubber 14 to a low level even after the retreading, it is effective to (1) control the sulfur content of the coating rubber 13B and/or the cushion rubber 14 at the time of a new tire product to a low level, or (2) control the sulfur content in the portion 17' of the retreading rubber 17 within 5 mm from the retreading interface S to a low level. Further, the inventor has noticed the relationship between the sulfur content C of the coating rubber 13B and/or the cushion rubber 14 and the retreading number N and made various studies on such a relationship and found that the retread tire satisfying the relationship of the equation (II) has a high durability. Particularly, the retread tire satisfying the relationship of the equation (II) has a large peel strength at the retreading interface and a high durability even if the sulfur content of the coating rubber 13B and/or the cushion rubber 14 as a new tire product is outside the range of 0.75-1.80% by mass or the sulfur content in the portion 17' of the retreading rubber 17 within 5 mm from the retreading interface S is outside the range of 0.75-1.80% by mass. Moreover, when the sulfur content C of the coating rubber 13B and/or the cushion rubber 14 exceeds the value defined in the right side of the equation (II), the deterioration of the properties in the coating rubber 13B and/or the cushion rubber 14 is large and also the lowering of the peel strength at the retreading interface is large. In the equation (II), the retreading number N is preferable to be a counting number of not more than 10. In this case, the retread tire has a sufficiently high durability.

The retread tire satisfying the relationship of the equation (II) can be manufactured by controlling the sulfur content of the coating rubber for the belt and/or the cushion rubber as a new tire product, the sulfur content in the portion of the retreading rubber within 5 mm from the retreading interface, and the curing conditions and the like. Moreover, the forming method of the base tire and the attaching method of the retreading rubber are not particularly limited. In such a retread tire, the sulfur content of the coating rubber for the belt and/or the cushion rubber as a new tire product and the sulfur content in the portion of the retreading rubber within 5 mm from the retreading interface are not particularly limited, but it is preferable that the sulfur content of the coating rubber for the belt and/or the cushion rubber as a new tire product and the sulfur content in the portion of the retreading rubber within 5 mm from the retreading interface are a range of 0.75-1.80% by mass, preferably 0.80-1.40% by mass, more preferably 0.90-1.20% by mass, respectively.

The above tire and retread tire according to the invention are high in the peel strength at the retreading interface even after the repetitive retreading, so that they are particularly suitable as a high-speed, high-load, expensive tire conducting plural retreading such as airplane tire or the like.

The following examples are given in illustration of the invention and are not intended as limitations thereof.

A rubber composition for a cushion rubber is prepared according to a compounding recipe shown in Table 1. Also, a rubber composition for a retreading rubber is prepared according to a compounding recipe shown in Table 2.

Table 1

| Cushion rubber | | | Rubber composition A | Rubber composition B | Rubber composition C |
|---|---|---|---|---|---|
| Compounding recipe | Natural rubber (RSS#1) | parts by mass | 100 | 100 | 100 |
| | Carbon black (N330) | | 50 | 50 | 50 |
| | Stearic acid | | 4 | 4 | 4 |
| | Zinc oxide | | 5 | 5 | 5 |
| | Antioxidant 6C *1 | | 1 | 1 | 1 |
| | Spindle oil | | 7 | 7 | 7 |
| | Vulcanization accelerator CZ*2 | | 0.5 | 0.5 | 0.5 |
| | Vulcanization accelerator DM *3 | | 0.5 | 0.5 | 0.5 |
| | Sulfur | | 1 | 2 | 3 |
| Sulfur content in rubber composition | | % by mass | 0.59 | 1.17 | 1.75 |
| * 1: N-(1,3-dimethylbutyl)-N'-phenyl-p-phenylenediamine<br>* 2: N-cyclohexyl-2-benzothiazole sulfenamide<br>*3: dibenzothiazyl disulfide | | | | | |

Table 2

| Retreading rubber | | | Rubber composition U | Rubber composition V | Rubber composition W |
|---|---|---|---|---|---|
| Compounding recipe | Natural rubber (RSS#1) | parts by mass | 100 | 100 | 100 |
| | Carbon black (N220) | | 50 | 50 | 50 |
| | Stearic acid | | 4 | 4 | 4 |

(continued)

| Retreading rubber | | | Rubber composition U | Rubber composition V | Rubber composition W |
|---|---|---|---|---|---|
| | Zinc oxide | | 5 | 5 | 5 |
| | Antixoidant 6C *1 | | 1 | 1 | 1 |
| | Vulcanization accelerator NS *4 | | 1 | 1 | 1 |
| | Sulfur | | 1 | 2 | 3 |
| Sulfur content in rubber composition | | % by mass | 0.62 | 1.23 | 1.84 |
| * 1: N-(1,3-dimethylbutyl)-N'-phenyl-p-phenylenediamine<br>*4: N-t-butyl-2-benzothiazolyl sulfenamide | | | | | |

Then, a bias tire for airplane having a tire size of H49x19 (new tire product, retreading number of zero) is prepared by using the rubber composition for the cushion rubber and the rubber composition for the retreading rubber in a combination shown in Table 3 and attaching the retreading rubber (tread rubber) to a radially outer face of the cushion rubber and then curing them. Also, a retread tire is prepared by removing the retreading rubber and a part of the cushion rubber from the new tire product to form a base tire, buffing the base tire, attaching a new retreading rubber to the base tire and then curing them. Further, the above retreading is repeated to prepare retread tires after the retreading number of 2, 4 and 6 times, respectively.

With respect to the above new tire and retread tires, a sample having a width of 1 cm and a length of 10 cm is cut out at a tread center portion in a direction from a treading face to an innerliner, and a carcass and a tread rubber are removed therefrom, and the remaining cushion rubber is sliced from the treading face at an interval corresponding to a thickness of 5 mm to obtain test specimens. The test specimens are a cushion rubber in the vicinity of the treading interface and the retreading rubber attached for the retreading. With respect to the test specimens, the tensile strength (Tb), sulfur content and peel strength are measured by the following methods. The results are shown in Table 3.

(1) Tensile strength (Tb)

The tensile strength (Tb) of the test specimen is measured by a tensile test according to a "tensile test method of cured rubber" of JIS K6251 and is represented by an index on the basis that the tensile strength of the test specimen taken out from the new tire of Comparative Example 3 (conventional example) is 100. The larger the index value, the larger the tensile strength.

(2) Sulfur content

The sulfur content (% by mass) is calculated by measuring a specific gravity of 200 mg of the test speciment by means of a specific gravity measuring machine made by Toyo Seiki Co., Ltd. and measuring a sulfur amount thereof by means of SC-432 made by LECO Corporation.

(3) Peel strength

The peel strength of the test specimen is measured by a peeling test according to a "adhesion test method of cured rubber" of JIS K6256 and represented by an index on the basis that the peel strength of the test specimen taken out from the new tire of Comparative Example 3 is 100. The larger the index value, the larger the peel strength.
Table 3

| | Comparative Example 1 | Example 1 | Example 2 | Comparative Example 2 | Example 3 | Comparative Example 3 | |
|---|---|---|---|---|---|---|---|
| Kind of rubber composition used in cushion rubber | A | B | B | C | C | C | |
| Kind of rubber composition used in retreading rubber | W | W | V | U | V | W | |
| Tb of cushion rubber (index) | | | | | | | |
| Retreading number of 0 | 55 | 100 | 100 | 55*5 | 100 | 100 | |
| Retreading number of 2 | - | 80 | 85 | - | 85 | 75 | |
| Retreading number of 4 | - | 60 | 65 | - | 70 | 45 | Value of right side of equation (I) |
| Retreading number of 6 | - | 40 | 45 | - | 60 | 35 | |
| Sulfur content of cushion rubber (% by mass) | | | | | | | |
| Retreading number of 0 | - | 1.6 | 1.6 | - | 1.8 | 1.8 | 1.6 |
| Retreading number of 2 | - | 2.4 | 2.0 | - | 2.3 | 2.7 | 2.5 |
| Retreading number of 4 | - | 3.1 | 2.4 | - | 2.7 | 3.5 | 3.2 |
| Retreading number of 6 | - | 3.6 | 2.7 | - | 3.0 | 4.1 | 3.7 |
| Peel strength (index) | | | | | | | |
| Retreading number of 0 | - | 115 | 115 | - | 100 | 100 | |
| Retreading number of 2 | - | 95 | 100 | - | 90 | 80 | |
| Retreading number of 4 | - | 95 | 100 | - | 90 | 80 | |
| Retreading number of 6 | - | 60 | 70 | - | 65 | 40 | |
| *5 Tb of retreading rubber | | | | | | | |

In Table 3, the examination as a tire and the retreading in Comparative Examples 1 and 2 are not carried out because the tensile strength of the cushion rubber in new tire product is very low in Comparative Example 1 and the tensile strength of the retreading rubber (tread rubber) in new tire product is very low in Comparative Example 2.

In the tire of Example 1, the rubber composition having a sulfur content of 0.75-1.60% by mass is used in the cushion rubber, so that the sulfur content after the retreading is lower than that of Comparative Example 3, and the lowering of the peel strength is suppressed.

In the tire of Example 3, the rubber composition having a sulfur content of 0.75-1.60% by mass is used in the retreading rubber, so that the rise of the sulfur content in the cushion rubber through the retreading is suppressed, and the sulfur content after the retreading is lower than that of Comparative Example 3, and the lowering of the peel strength is suppressed.

In the tire of Example 2, the rubber composition having a sulfur content of 0.75-1.60% by mass is used in each of the cushion rubber and the retreading rubber, so that the rise of the sulfur content in the cushion rubber through the retreading is suppressed, and the sulfur content after the retreading is highly lower than that of Comparative Example 3, and the lowering of the peel strength is considerably suppressed.

Moreover, in the retread tires of Examples 1-3, the sulfur content C in the cushion rubber and the retreading number N satisfy the relationship of the equation (I), from which it is understood that the tires satisfying the relationship of the equation (I) are large in the peel strength between the cushion rubber and the retreading rubber.

A rubber composition for a cushion rubber is prepared according to a compounding recipe shown in Table 4. Also, a rubber composition for a retreading rubber is prepared according to a compounding recipe shown in Table 5.

Table 4

| Retreading rubber | | | Rubber composition D | Rubber composition E | Rubber composition F |
|---|---|---|---|---|---|
| Compounding recipe | Natural rubber (RSS#1) | parts by mass | 100 | 100 | 100 |
| | Carbon black (N330) | | 40 | 40 | 40 |
| | Stearic acid | | 3 | 3 | 3 |
| | Zinc oxide | | 5 | 5 | 5 |
| | Antixoidant 6C *1 | | 2 | 2 | 2 |
| | Vulcanization accelerator NS *4 | | 1.2 | 1.2 | 1.2 |
| | Sulfur | | 1 | 2 | 3 |
| Sulfur content in rubber composition | | % by mass | 0.66 | 1.31 | 1.95 |
| *1: N-(1,3-dimethylbutyl)-N'-phenyl-p-phenylenediamine *4: N-t-butyl-2-benzothiazolyl sulfenamide | | | | | |

Table 5

| Retreading rubber | | | Rubber composition X | Rubber composition Y | Rubber composition X |
|---|---|---|---|---|---|
| Compounding recipe | Natural rubber (RSS#1) | parts by mass | 100 | 100 | 100 |
| | Carbon black (N330) | | 40 | 40 | 40 |
| | Stearic acid | | 3 | 3 | 3 |
| | Zinc oxide | | 5 | 5 | 5 |
| | Antixoidant 6C *1 | | 2 | 2 | 2 |

(continued)

| Retreading rubber | | | Rubber composition X | Rubber composition Y | Rubber composition X |
|---|---|---|---|---|---|
| | Vulcanization accelerator NS *4 | | 1.2 | 1.2 | 1.2 |
| | Sulfur | | | 1 2 3 | |
| Sulfur content in rubber composition | | % by mass | 0.66 | 1.31 | 1.95 |
| *1: N-(1,3-dimethylbutyl)-N'-phenyl-p-phenylenediamine *4: N-t-butyl-2-benzothiazolyl sulfenamide | | | | | |

Then, a radial tire for airplane having a tire size of 50x20R22 (new tire product, retreading number of zero) is prepared by using the rubber composition for the cushion rubber and the rubber composition for the retreading rubber in a combination shown in Table 6 and attaching the retreading rubber (tread rubber) to a radially outer face of the cushion rubber and then curing them. Also, a retread tire is prepared by removing the retreading rubber and a part of the cushion rubber from the new tire product to form a base tire, buffing the base tire, attaching a new retreading rubber to the base tire and then curing them. Further, the above retreading is repeated to prepare retread tires after the retreading number of 2, 4 and 6 times, respectively.

With respect to the above new tire and retread tires, the tensile strength (Tb), sulfur content and peel strength are measured by the same methods as described above to obtain results as shown in Table 6. In Table 6, the tensile strength and peel strength are represented by an index on the basis that Comparative Example 6 is 100, respectively.

Table 6

| | Comparative Example 4 | Example 4 | Example 5 | Comparative Example 5 | Example 6 | Comparative Example 6 | |
|---|---|---|---|---|---|---|---|
| Kind of rubber composition used in cushion rubber | D | E | E | F | F | F | |
| Kind of rubber composition used in retreading rubber | Z | Z | Y | X | Y | Z | |
| Tb of cushion rubber (index) | | | | | | | |
| Retreading number of 0 | 55 | 100 | 100 | 55 *5 | 100 | 100 | |
| Retreading number of 2 | - | 80 | 85 | - | 85 | 75 | |
| Retreading number of 4 | - | 60 | 65 | - | 70 | 45 | Value of right side of equation (II) |
| Retreading number of 6 | - | 40 | 45 | - | 60 | 35 | |
| Sulfur content of cushion rubber (% by mass) | | | | | | | |

(continued)

| | Comparative Example 4 | Example 4 | Example 5 | Comparative Example 5 | Example 6 | Comparative Example 6 | |
|---|---|---|---|---|---|---|---|
| Retreading number of 0 | - | 1.2 | 1.3 | - | 1.7 | 1.7 | 1.8 3.0 |
| Retreading number of 2 | - | 2.6 | 2.2 | - | 2.6 | 3.0 | |
| Retreading number of 4 | - | 3.8 | 3.2 | - | 3.7 | 4.2 | 4.1 |
| Retreading number of 6 | - | 4.9 | 4.0 | - | 4.6 | 5.3 | 5.1 |
| Peel strength (index) | | | | | | | |
| Retreading number of 0 | - | 115 | 115 | - | 100 | 100 | |
| Retreading number of 2 | - | 95 | 100 | - | 90 | 80 | |
| Retreading number of 4 | - | 75 | 80 | - | 80 | 60 | |
| Retreading number of 6 | - | 60 | 70 | - | 65 | 40 | |
| *5 Tb of retreading rubber | | | | | | | |

In Table 6, the examination as a tire and the retreading in Comparative Examples 4 and 5 are not carried out because the tensile strength of the cushion rubber in new tire product is very low in Comparative Example 4 and the tensile strength of the retreading rubber (tread rubber) in new tire product is very low in Comparative Example 5.

In the tire of Example 4, the rubber composition having a sulfur content of 0.75-1.80% by mass is used in the cushion rubber, so that the sulfur content after the retreading is lower than that of Comparative Example 6, and the lowering of the peel strength is suppressed.

In the tire of Example 6, the rubber composition having a sulfur content of 0.75-1.80% by mass is used in the retreading rubber, so that the rise of the sulfur content in the cushion rubber through the retreading is suppressed, and the sulfur content after the retreading is lower than that of Comparative Example 6, and the lowering of the peel strength is suppressed.

In the tire of Example 5, the rubber composition having a sulfur content of 0.75-1.80% by mass is used in each of the cushion rubber and the retreading rubber, so that the rise of the sulfur content in the cushion rubber through the retreading is suppressed, and the sulfur content after the retreading is highly lower than that of Comparative Example 6, and the lowering of the peel strength is considerably suppressed.

Moreover, in the retread tires of Examples 4-6, the sulfur content C in the cushion rubber and the retreading number N satisfy the relationship of the equation (II), from which it is understood that the tires satisfying the relationship of the equation (II) are large in the peel strength between the cushion rubber and the retreading rubber.

**Claims**

1.   A retread tire comprising at least a bias carcass (2), a cushion rubber (3) and a retreading rubber (5) viewing from an inside of a tread center zone in a radial direction of the tire, wherein a sulfur content in a portion (5') of the retreading rubber located within 5 mm from a retreading interface (S) is 0.75-1.60% by mass, and **characterised in that** a sulfur content C (% by mass) in the cushion rubber and a retreading number N satisfy a relationship of the following equation (I):

$$C \le -0.025 \times N^2 + 0.5 \times N + 1.6 \ ..... \ (I)$$

2.  A retread tire as claimed in claim 1, wherein the sulfur content of the cushion rubber at a non-retreading state (new product) is 0.75-1.60% by mass.

3.  A retread tire as claimed in claim 1 or 2, wherein the bias carcass is comprised of one or more carcass plies each containing plural cords (2A) covered with a coating rubber (2B), and a distance (D) between the cord constituting an outermost carcass ply (2') in the radial direction of the tire and the retreading interface is not more than 5 mm.

4.  A retread tire comprising at least a radial carcass (12), a belt (13) and a retreading rubber (17) viewing from an inside of a tread center zone in a radial direction of the tire, wherein the belt is comprised of one or more belt layers each containing plural cords (13A) covered with a coating rubber (13B) and a sulfur content in a portion (17') of the retreading rubber located within 5 mm from a retreading interface (S) is 0.75-1.80% by mass, and **characterised in that** a sulfur content C (% by mass) in the coating rubber for the belt and a retreading number N satisfy a relationship of the following equation (II):

$$C \leq -0.015 \times N^2 + 0.65 \times N + 1.80 \ ..... \ (II)$$

5.  A retread tire comprising at least a radial carcass (12), a belt (13), a cushion rubber (14) and a retreading rubber (17) viewing from an inside of a tread center zone in a radial direction of the tire, wherein the belt is comprised of one or more belt layers each containing plural cords (13A) covered with a coating rubber (13B) and a sulfur content in a portion (17') of the retreading rubber located within 5 mm from a retreading interface (S) is 0.75-1.80% by mass, and **characterised in that** a sulfur content C (% by mass) in the cushion rubber and a retreading number N satisfy a relationship of the following equation (II):

$$C \leq -0.015 \times N^2 + 0.65 \times N + 1.80 \ ..... \ (II)$$

6.  A retread tire as claimed in claim 4 or 5, wherein the sulfur content is 0.80-1.40% by mass.

7.  A retread tire as claimed in any of claims 4 or 6, wherein the sulfur content of the coating rubber for the belt or the cushion rubber at a non-retreading state (new product) is 0.75-1.80% by mass.

8.  A retread tire as claimed in claim 7, wherein the sulfur content of the coating rubber for the belt or the cushion rubber at the non-retreading state is 0.80-1.40% by mass.

9.  A retread tire as claimed in any of claims 4 to 8, wherein the radial carcass is comprised of one or more carcass plies each containing plural cords (12A) covered with a coating rubber (12B), and a distance (D) between the cord constituting an outermost carcass ply in the radial direction of the tire and the retreading interface is not more than 5 mm.

10. A retread tire as claimed in any of claims 1 to 9. wherein the retreading number N is a counting number of not more than 10.

11. A method of producing a retread tire comprising at least a bias carcass (2), a cushion rubber (3) and a retreading rubber (5) viewing from an inside of a tread center zone in a radial direction of the tire, which comprises a step of attaching a retreading rubber to a radially outer face of a base tire including a carcass and a cushion rubber, wherein a sulfur content in a portion (5') of the retreading rubber located within 5 mm from a retreading interface (S) is 0.75-1.60% by mass, and **characterised in that** a sulfur content C (% by mass) in the cushion rubber and a retreading number N satisfy a relationship of the following equation (I):

$$C \leq -0.025 \times N^2 + 0.5 \times N + 1.6 \ ..... \ (I)$$

12. A method as claimed in claim 11, wherein the sulfur content of the cushion rubber at a non-retreading state is 0.75-1.60% by mass.

**13.** A method as claimed in claim 11 or 12, wherein the bias carcass is comprised of one or more carcass plies each containing plural cords (2A) covered with a coating rubber (2B), and a distance (D) between the cord constituting an outermost carcass ply (2') in the radial direction of the tire and the retreading interface is not more than 5 mm.

**14.** A method of producing a retread tire comprising at least a radial carcass (12), a belt (13) and a retreading rubber (17) viewing from an inside of a tread center zone in a radial direction of the tire, which comprises a step of attaching a retreading rubber to a radially outer face of a base tire including a carcass and a belt, wherein the belt is comprised of one or more belt layers each containing plural cords (13A) covered with a coating rubber (13B) and a sulfur content in a portion (17') of the retreading rubber located within 5 mm from a retreading interface (S) is 0.75-1.80% by mass, and **characterised in that** a sulfur content C (% by mass) in the coating rubber for the belt and a retreading number N satisfy a relationship of the following equation (II):

$$C \leq -0.015 \times N^2 + 0.65 \times N + 1.80 \ ..... \ (II)$$

**15.** A method of producing a retread tire comprising at least a radial carcass (12), a belt (13), a cushion rubber (14) and a retreading rubber (17)
viewing from an inside of a tread center zone in a radial direction of the tire, which comprises a step of attaching a retreading rubber to a radially outer face of a base tire including a carcass, a belt and a cushion rubber, wherein the belt is comprised of one or more belt layers each containing plural cords (13A) covered with a coating rubber (13B) and a sulfur content in a portion (17') of the retreading rubber located within 5 mm from a retreading interface (S) is 0.75-1.80% by mass, and **characterised in that** a sulfur content C (% by mass) in the cushion rubber and a retreading number N satisfy a relationship of the following equation (II):

$$C \leq -0.015 \times N^2 + 0.65 \times N + 1.80 \ ..... \ (II)$$

**16.** A method as claimed in claim 14 or 15, wherein the sulfur content is 0.80-1.40% by mass.

**17.** A method as claimed in any of claims 14 to 16, wherein the sulfur content of the coating rubber for the belt or the cushion rubber at a non-retreading state is 0.75-1.80% by mass.

**18.** A method as claimed in claim 17, wherein the sulfur content of the coating rubber for the belt or the cushion rubber at the non-retreading state is 0.80-1.40% by mass.

**19.** A method as claimed in any of claims 14 to 18, wherein the radial carcass is comprised of one or more carcass plies each containing plural cords covered with a coating rubber, and a distance between the cord constituting an outermost carcass ply in the radial direction of the tire and the retreading interface is not more than 5 mm.

**Patentansprüche**

**1.** Runderneuerungsreifen, der wenigstens eine Diagonalkarkasse (2), einen Polstergummi (3) und einen Runderneuerungsgummi (5) umfasst, gesehen von einer Innenseite einer Laufflächen-Mittelzone in einer Radialrichtung des Reifens, wobei ein Schwefelgehalt in einem Abschnitt (5') des Runderneuerungsgummis, der innerhalb von 5 mm von einer Runderneuerungsgrenzfläche (S) angeordnet ist, 0,75 bis 1,60 Gewichts-% beträgt, und **dadurch gekennzeichnet, dass** ein Schwefelgehalt C (Gewichts-%) in dem Polstergummi und eine Runderneuerungsanzahl N eine Beziehung der folgenden Gleichung (I) erfüllen:

$$C \leq -0,025 \times N^2 + 0,5 \times N + 1,6 \ ..... \ (I).$$

**2.** Runderneuerungsreifen nach Anspruch 1, wobei der Schwefelgehalt des Polstergummis in einem Nicht-Runderneuerungszustand (neues Erzeugnis) 0,75 bis 1,60 Gewichts-% beträgt.

3. Runderneuerungsreifen nach Anspruch 1 oder 2, wobei die Diagonalkarkasse aus einer oder mehreren Karkassenlagen besteht, die jeweils mehrere Kords (2A) enthalten, die mit einem Überzugsgummi (2B) bedeckt sind, und ein Abstand (D) zwischen dem Kord, der eine äußerste Karkassenlage (2') in der Radialrichtung des Reifens ausmacht, und der Runderneuerungsgrenzfläche nicht mehr als 5 mm beträgt.

4. Runderneuerungsreifen, der wenigstens eine Radialkarkasse (12), einen Gürtel (13) und einen Runderneuerungsgummi (17) umfasst, gesehen von einer Innenseite einer Lauffflächen-Mittelzone in einer Radialrichtung des Reifens, wobei der Gürtel aus einer oder mehreren Gürtellagen besteht, die jeweils mehrere Kords (13A) enthalten, die mit einem Überzugsgummi (13B) bedeckt sind, und ein Schwefelgehalt in einem Abschnitt (17') des Runderneuerungsgummis, der innerhalb von 5 mm von einer Runderneuerungsgrenzfläche (S) angeordnet ist, 0,75 bis 1,80 Gewichts-% beträgt, und **dadurch gekennzeichnet, dass** ein Schwefelgehalt C (Gewichts-%) in dem Überzugsgummi für den Gürtel und eine Runderneuerungsanzahl N eine Beziehung der folgenden Gleichung (II) erfüllen:

$$C \leq -0,015 \times N^2 + 0,65 \times N + 1,80 \ ..... \ (II).$$

5. Runderneuerungsreifen, der wenigstens eine Radialkarkasse (12), einen Gürtel (13), einen Polstergummi (14) und einen Runderneuerungsgummi (17) umfasst, gesehen von einer Innenseite einer Lauffflächen-Mittelzone in einer Radialrichtung des Reifens, wobei der Gürtel aus einer oder mehreren Gürtellagen besteht, die jeweils mehrere Kords (13A) enthalten, die mit einem Überzugsgummi (13B) bedeckt sind, und ein Schwefelgehalt in einem Abschnitt (17') des Runderneuerungsgummis, der innerhalb von 5 mm von einer Runderneuerungsgrenzfläche (S) angeordnet ist, 0,75 bis 1,80 Gewichts-% beträgt, und **dadurch gekennzeichnet, dass** ein Schwefelgehalt C (Gewichts-%) in dem Polstergummi und eine Runderneuerungsanzahl N eine Beziehung der folgenden Gleichung (II) erfüllen:

$$C \leq -0,015 \times N^2 + 0,65 \times N + 1,80 \ ..... \ (II).$$

6. Runderneuerungsreifen nach Anspruch 4 oder 5, wobei der Schwefelgehalt 0,80 bis 1,40 Gewichts-% beträgt.

7. Runderneuerungsreifen nach einem der Ansprüche 4 oder 6, wobei der Schwefelgehalt des Überzugsgummis für den Gürtel oder des Polstergummis in einem Nicht-Runderneuerungszustand (neues Erzeugnis) 0,75 bis 1,80 Gewichts-% beträgt.

8. Runderneuerungsreifen nach Anspruch 7, wobei der Schwefelgehalt des Überzugsgummis für den Gürtel oder des Polstergummis in dem Nicht-Runderneuerungszustand 0,80 bis 1,40 Gewichts-% beträgt.

9. Runderneuerungsreifen nach einem der Ansprüche 4 bis 8, wobei die Radialkarkasse aus einer oder mehreren Karkassenlagen besteht, die jeweils mehrere Kords (12A) enthalten, die mit einem Überzugsgummi (12B) bedeckt sind, und ein Abstand (D) zwischen dem Kord, der eine äußerste Karkassenlage in der Radialrichtung des Reifens ausmacht, und der Runderneuerungsgrenzfläche nicht mehr als 5 mm beträgt.

10. Runderneuerungsreifen nach einem der Ansprüche 1 bis 9, wobei die Runderneuerungsanzahl N eine Zählungsanzahl von nicht mehr als 10 ist.

11. Verfahren zum Herstellen eines Runderneuerungsreifens, der wenigstens eine Diagonalkarkasse (2), einen Polstergummi (3) und einen Runderneuerungsgummi (5) umfasst, gesehen von einer Innenseite einer Lauffflächen-Mittelzone in einer Radialrichtung des Reifens, das einen Schritt des Befestigens eines Runderneuerungsgummis an einer in Radialrichtung äußeren Fläche eines Grundreifens, der eine Karkasse und einen Polstergummi einschließt, umfasst, wobei ein Schwefelgehalt in einem Abschnitt (5') des Runderneuerungsgummis, der innerhalb von 5 mm von einer Runderneuerungsgrenzfläche (S) angeordnet ist, 0,75 bis 1,60 Gewichts-% beträgt, und **dadurch gekennzeichnet, dass** ein Schwefelgehalt C (Gewichts-%) in dem Polstergummi und eine Runderneuerungsanzahl N eine Beziehung der folgenden Gleichung (I) erfüllen::

$$C \leq -0,025 \times N^2 + 0,5 \times N + 1,6 \ ..... \ (I).$$

**12.** Verfahren nach Anspruch 11, wobei der Schwefelgehalt des Polstergummis in einem Nicht-Runderneuerungszustand 0,75 bis 1,60 Gewichts-% beträgt.

**13.** Verfahren nach Anspruch 11 oder 12, wobei die Diagonalkarkasse aus einer oder mehreren Karkassenlagen besteht, die jeweils mehrere Kords (2A) enthalten, die mit einem Überzugsgummi (2B) bedeckt sind, und ein Abstand (D) zwischen dem Kord, der eine äußerste Karkassenlage (2') in der Radialrichtung des Reifens ausmacht, und der Runderneuerungsgrenzfläche nicht mehr als 5 mm beträgt.

**14.** Verfahren zum Herstellen eines Runderneuerungsreifens, der wenigstens eine Radialkarkasse (12), einen Gürtel (13) und einen Runderneuerungsgummi (17) umfasst, gesehen von einer Innenseite einer Laufflächen-Mittelzone in einer Radialrichtung des Reifens, das einen Schritt des Befestigens eines Runderneuerungsgummis an einer in Radialrichtung äußeren Fläche eines Grundreifens, der eine Karkasse und einen Gürtel einschließt, umfasst, wobei der Gürtel aus einer oder mehreren Gürtellagen besteht, die jeweils mehrere Kords (13A) enthalten, die mit einem Überzugsgummi (13B) bedeckt sind, und ein Schwefelgehalt in einem Abschnitt (17') des Runderneuerungsgummis, der innerhalb von 5 mm von einer Runderneuerungsgrenzfläche (S) angeordnet ist, 0,75 bis 1,80 Gewichts-% beträgt, und **dadurch gekennzeichnet, dass** ein Schwefelgehalt C (Gewichts-%) in dem Überzugsgummi für den Gürtel und eine Runderneuerungsanzahl N eine Beziehung der folgenden Gleichung (II) erfüllen:

$$C \leq -0{,}015 \times N^2 + 0{,}65 \times N + 1{,}80 \ \ldots \ (II).$$

**15.** Verfahren zum Herstellen eines Runderneuerungsreifens, der wenigstens eine Radialkarkasse (12), einen Gürtel (13), einen Polstergummi (14) und einen Runderneuerungsgummi (17) umfasst, gesehen von einer Innenseite einer Laufflächen-Mittelzone in einer Radialrichtung des Reifens, das einen Schritt des Befestigens eines Runderneuerungsgummis an einer in Radialrichtung äußeren Fläche eines Grundreifens, der eine Karkasse, einen Gürtel und einen Polstergummi einschließt, umfasst, wobei der Gürtel aus einer oder mehreren Gürtellagen besteht, die jeweils mehrere Kords (13A) enthalten, die mit einem Überzugsgummi (13B) bedeckt sind, und ein Schwefelgehalt in einem Abschnitt (17') des Runderneuerungsgummis, der innerhalb von 5 mm von einer Runderneuerungsgrenzfläche (S) angeordnet ist, 0,75 bis 1,80 Gewichts-% beträgt, und **dadurch gekennzeichnet, dass** ein Schwefelgehalt C (Gewichts-%) in dem Polstergummi und eine Runderneuerungsanzahl N eine Beziehung der folgenden Gleichung (II) erfüllen:

$$C \leq -0{,}015 \times N^2 + 0{,}65 \times N + 1{,}80 \ \ldots \ (II).$$

**16.** Verfahren nach Anspruch 14 oder 15, wobei der Schwefelgehalt 0,80 bis 1,40 Gewichts-% beträgt.

**17.** Verfahren nach einem der Ansprüche 14 bis 16, wobei der Schwefelgehalt des Überzugsgummis für den Gürtel oder des Polstergummis in einem Nicht-Runderneuerungszustand 0,75 bis 1,80 Gewichts-% beträgt.

**18.** Verfahren nach Anspruch 17, wobei der Schwefelgehalt des Überzugsgummis für den Gürtel oder des Polstergummis in dem Nicht-Runderneuerungszustand 0,80 bis 1,40 Gewichts-% beträgt.

**19.** Verfahren nach einem der Ansprüche 14 bis 18, wobei die Radialkarkasse aus einer oder mehreren Karkassenlagen besteht, die jeweils mehrere Kords enthalten, die mit einem Überzugsgummi bedeckt sind, und ein Abstand zwischen dem Kord, der eine äußerste Karkassenlage in der Radialrichtung des Reifens ausmacht, und der Runderneuerungsgrenzfläche nicht mehr als 5 mm beträgt.

**Revendications**

**1.** Bandage pneumatique rechapé, comprenant au moins une carcasse diagonale (2), une gomme de coussin (3) et une gomme de rechapage (5), vu d'un intérieur d'une zone centrale de la bande de roulement, dans une direction radiale du bandage pneumatique, la teneur en soufre dans une partie (5') de la gomme de rechapage agencée dans le cadre d'une distance de 5 mm d'une interface de rechapage (S) représentant 0,75 à 1,60% en poids, **caractérisé en ce qu'**une teneur en soufre C (% en poids) dans la gomme de coussin et un nombre de rechapages N satisfont la relation selon l'équation ci-dessous (I) :

$$C \leq -0,025 \times N^2 + 0,5 \times N + 1,6 \ldots\ldots \text{(I)}$$

**2.** Bandage pneumatique rechapé selon la revendication 1, dans lequel la teneur en soufre de la gomme de coussin dans un état non rechapé (produit neuf) représente 0,75 à 1,60% en poids.

**3.** Bandage pneumatique rechapé selon les revendications 1 ou 2, dans lequel la carcasse diagonale comprend une ou plusieurs nappes de carcasse, contenant chacune plusieurs câblés (2A) recouverts d'une gomme de revêtement (2B), une distance (D) entre le câblé constituant la nappe de carcasse la plus externe (2') dans la direction radiale du bandage pneumatique et l'interface de rechapage ne représentant pas plus de 5 mm.

**4.** Bandage pneumatique rechapé, comprenant au moins une carcasse radiale (12), une ceinture (13) et une gomme de rechapage (17), vu d'un intérieur d'une zone centrale de la bande de roulement, dans une direction radiale du bandage pneumatique, la ceinture comprenant une ou plusieurs couches de ceinture, contenant chacune plusieurs câblés (13A) recouverts d'une gomme de revêtement (13B), une teneur en soufre dans une partie (17') de la gomme de rechapage située dans le cadre d'une distance de 5 mm d'une interface de rechapage (S) représentant 0,75 à 1,80% en poids, **caractérisé en ce qu'**une teneur en soufre C (% en poids) dans la gomme de revêtement de la ceinture et un nombre de rechapages N satisfont la relation selon l'équation ci-dessous (II) :

$$C \leq -0,015 \times N^2 + 0,65 \times N + 1,80 \ldots\ldots \text{(II)}$$

**5.** Bandage pneumatique rechapé, comprenant au moins une carcasse radiale (12), une ceinture (13), une gomme de coussin (14) et une gomme de rechapage (17), vu d'un intérieur d'une zone centrale de la bande de roulement, dans une direction radiale du bandage pneumatique, la ceinture comprenant une ou plusieurs couches de ceinture, contenant chacune plusieurs câblés (13A) recouverts d'une gomme de revêtement (13B), une teneur en soufre dans une partie (17') de la gomme de rechapage située dans le cadre d'une distance de 5 mm d'une interface de rechapage (S) représentant 0,75 à 1,80% en poids, **caractérisé en ce qu'**une teneur en soufre C (% en poids) dans la gomme de coussin et un nombre de rechapages N satisfont la relation selon l'équation ci-dessous (II) :

$$C \leq -0,015 \times N^2 + 0,65 \times N + 1,80 \ldots\ldots \text{(II)}$$

**6.** Bandage pneumatique rechapé selon la revendication 4 ou 5, dans lequel la teneur en soufre représente 0,80 à 1,40% en poids.

**7.** Bandage pneumatique rechapé selon l'une quelconque des revendications 4 ou 6, dans lequel la teneur en soufre de la gomme de revêtement de la ceinture ou de la gomme de coussin, dans un état non rechapé (produit neuf), représente 0,75 à 1,80% en poids.

**8.** Bandage pneumatique rechapé selon la revendication 7, dans lequel la teneur en soufre de la gomme de revêtement de la ceinture ou de la gomme de coussin, dan s l'état non rechapé, représente 0,80 à 1,40% en poids.

**9.** Bandage pneumatique rechapé selon l'une quelconque des revendications 4 à 8, dans lequel la carcasse radiale comprend une ou plusieurs nappes de carcasse, contenant chacune plusieurs câblés (12A) recouverts d'une gomme de revêtement (12B), une distance (D) entre le câblé constituant la nappe de carcasse la plus externe, dans la direction radiale du bandage pneumatique, et l'interface de rechapage ne représentant pas plus de 5 mm.

**10.** Bandage pneumatique rechapé selon l'une quelconque des revendications 1 à 9, dans lequel le nombre de rechapages est un nombre de comptage non supérieur à 10.

**11.** Procédé de production d'un bandage pneumatique rechapé, comprenant au moins une carcasse diagonale (2), une gomme de coussin (3) et une gomme de rechapage (5), vu d'un intérieur d'une zone centrale de la bande de roulement, dans une direction radiale du bandage pneumatique, comprenant une étape de fixation d'une gomme de rechapage sur une face radialement externe d'un bandage pneumatique de base, englobant une carcasse et une gomme de coussin, une teneur en soufre dans une partie (5') de la gomme de rechapage située dans le cadre d'une distance de 5 mm d'une interface de rechapage (S) représentant 0,75 à 1,80% en poids, **caractérisé en ce qu'**une teneur en soufre C (% en poids) dans la gomme de coussin et un nombre de rechapages N satisfont la relation selon l'équation ci-dessous (I) :

$$C \leq -0,025 \text{ x } N^2 + 0,5 \text{ x } N + 1,6 \ldots\ldots \text{ (I)}$$

**12.** Procédé selon la revendication 11, dans lequel la teneur en soufre de la gomme de coussin, dans un état non rechapé, représente 0,75 à 1,60% en poids.

**13.** Procédé selon la revendication 11 ou 12, dans lequel la carcasse diagonale comprend une ou plusieurs nappes de carcasse, contenant chacune plusieurs câblés (2A) recouverts d'une gomme de revêtement (2B), une distance (D) entre le câblé constituant la nappe de carcasse la plus externe (2'), dans la direction radiale du bandage pneumatique, et l'interface de rechapage ne représentant pas plus de 5 mm.

**14.** Procédé de production d'un bandage pneumatique rechapé, comprenant au moins une carcasse radiale (12), une ceinture (13) et une gomme de rechapage (17), vu d'un intérieur d'une zone centrale de la bande de roulement, dans une direction radiale du bandage pneumatique, comprenant une étape de fixation d'une gomme de rechapage sur une face radialement externe d'un bandage pneumatique de base, englobant une carcasse et une ceinture, la ceinture comprenant une ou plusieurs couches de ceinture, contenant chacune plusieurs câblés (13A) recouverts d'une gomme de revêtement (13B), une teneur en soufre dans une partie (17') de la gomme de rechapage située dans le cadre d'une distance de 5 mm d'une interface de rechapage (S) représentant 0,75 à 1,80% en poids, **caractérisé en ce qu'**une teneur en soufre C (% en poids) dans la gomme de revêtement de la ceinture et un nombre de rechapages N satisfont la relation selon l'équation ci-dessous (II) :

$$C \leq -0,015 \text{ x } N^2 + 0,65 \text{ x } N + 1,80 \ldots\ldots \text{ (II)}$$

**15.** Procédé de production d'un bandage pneumatique rechapé, comprenant au moins une carcasse radiale (12), une ceinture (13), une gomme de coussin (14) et une gomme de rechapage (17), vu d'un intérieur d'une zone centrale de la bande de roulement, dans une direction radiale du bandage pneumatique, comprenant une étape de fixation d'une gomme de rechapage sur une face radialement externe d'un bandage pneumatique de base, englobant une carcasse, une ceinture et une gomme de coussin, la ceinture comprenant une ou plusieurs couches de ceinture, contenant chacune plusieurs câblés (13A) recouverts d'une gomme de revêtement (13B), une teneur en soufre dans une partie (17') de la gomme de rechapage située dans le cadre d'une distance de 5 mm d'une interface de rechapage (S) représentant 0,75 à 1,80% en poids, **caractérisé en ce qu'**une teneur en soufre C (% en poids) dans la gomme de coussin et un nombre de rechapages N satisfont la relation selon l'équation ci-dessous (II) :

$$C \leq -0,015 \text{ x } N^2 + 0,65 \text{ x } N + 1,80 \ldots\ldots \text{ (II)}$$

**16.** Procédé selon la revendication 14 ou 15, dans lequel la teneur en soufre représente 0,80 à 1,40% en poids.

**17.** Procédé selon l'une quelconque des revendications 14 à 16, dans lequel la teneur en soufre de la gomme de revêtement de la ceinture ou de la gomme de coussin, dans un état non rechapé, représente 0,75 à 1,80% en poids.

**18.** Procédé selon la revendication 17, dans lequel la teneur en soufre de la gomme de revêtement de la ceinture et de la gomme de coussin, dans l'état non rechapé, représente 0,80 à 1,40% en poids.

**19.** Procédé selon l'une quelconque des revendications 14 à 18, dans lequel la carcasse radiale comprend une ou plusieurs nappes de carcasse, contenant chacune plusieurs câblés recouverts d'une gomme de revêtement, une distance entre le câblé constituant la nappe de carcasse la plus externe, dans la direction radiale du bandage pneumatique, et une interface de rechapage ne représentant pas plus de 5 mm.

## FIG. 1

## FIG. 2

## FIG. 3

## FIG. 4

## FIG. 5

## FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004043640 A
- JP 3502176 B
- JP 2002356102 A
- US 3198679 A
- US 2005034797 A1
- US 20050034797 A
- EP 0738614 A